# EUROPEAN PATENT APPLICATION

(11) **EP 4 844 854 A1**
(43) Date of publication of application: **25.11.2026**
(21) Application number: 25848816.2
(22) Date of filing: 23.07.2025
(51) Int. Cl.: H01M 10/052, H01M 50/446, H01M 50/491, H01M 4/62, H01M 4/58, H01M 10/0568, H01M 10/0569, H01M 4/02

(54) **LITHIUM METAL SECONDARY BATTERY**

(30) Priority: 30.07.2024 KR 20240100663; 11.07.2025 KR 20250093507
(71) Applicant: LG Energy Solution, Ltd., Seoul 07335 (KR)
(72) Inventor: KIM, Soohyun, Daejeon 34122 (KR); SHIN, Dongseok, Daejeon 34122 (KR); KIM, Taejong, Daejeon 34122 (KR); CHOI, Jeongin, Daejeon 34122 (KR)
(74) Representative: Hoffmann Eitle
(86) International application number: PCT/KR2025/010910
(87) International publication number: WO 2026/029473

(57) **Abstract**

The present invention relates to a lithium metal secondary battery in which side reactions and generation of by-products at an interface of a lithium metal negative electrode are suppressed and electrochemical properties and lifespan properties are improved. The lithium metal secondary battery comprises: a positive electrode including a positive electrode active material layer; a negative electrode including a lithium metal layer; a separator including a porous separator substrate and an active layer formed only on one surface of the porous separator substrate facing the positive electrode, the active layer including inorganic oxide particles having a dielectric constant of 5 or higher and a polymer binder; and an electrolyte, wherein the active layer of the separator may be in contact with the positive electrode active material layer, and the lithium metal layer may be in contact with the porous separator substrate.

## Description

### TECHNICAL FIELD

### Cross Citation with Related Application(s)

This application claims priority to and the benefit of Korean Patent Application No. 10-2024-0100663, filed on July 30, 2024, and Korean Patent Application No. 10-2025-0093507, filed on July 11, 2025, the disclosures of which are incorporated herein by reference in their entirety.

The present disclosure relates to a lithium metal secondary battery that suppress the occurrence of side reactions and byproducts at the lithium metal negative electrode interface and exhibits improved electrochemical and lifetime characteristics.

### BACKGROUND

Recently, as the application area of lithium secondary batteries has rapidly been extended not only to supply power for electronic devices such as electricity, electronics, communication, and computers, but also to power storage and supply for large-sized devices such as automobiles and power storage systems, demand for secondary batteries that have high capacity, high output and high stability is increasing.

Lithium metal battery is a battery to which a negative electrode active material made from lithium metal (Li-metal) material is applied, and has the advantage of having a theoretically very high energy density and capacity as compared with a battery using a graphite-based or lithium alloy-based negative electrode which have been conventionally used. Thus, research and development are ongoing to apply such a lithium metal battery to a battery that requires a high energy density.

However, the lithium metal battery has disadvantages in that during the charging and discharging process, the volume change of the negative electrode is significant, needle-like lithium metal layers (lithium dendrites, etc.) grow non-uniformly, and the high reactivity of lithium metal leads to the occurrence of side reactions and byproducts at the interface between the lithium metal layer and the electrolyte, resulting in a large irreversible capacity. In particular, the occurrence of large amounts of by-products at the negative electrode interface may greatly reduce the output and capacity of a secondary battery due to an increase in battery resistance, and may further cause considerable deterioration in the electrochemical performance and lifetime characteristics of the lithium metal secondary battery.

For this reason, multifaceted attempts have been made to suppress the occurrence of large amounts of byproducts at the lithium metal negative electrode interface and to improve the electrochemical and lifetime characteristics of the lithium metal secondary battery, but the problems have not yet been sufficiently resolved.

### DETAILED DESCRIPTION OF THE INVENTION

### Technical Problem

It is an object of the present disclosure to provide a lithium metal secondary battery that exhibits improved electrochemical and lifetime characteristics while minimizing the occurrence of side reactions and byproducts at the lithium metal negative electrode interface.

### Technical Solution

According to an aspect of the present disclosure, there is provided a lithium metal secondary battery comprising:
a positive electrode including a positive electrode active material layer;
a negative electrode including a lithium metal layer;
a separator that comprises a porous separator substrate and an active layer formed only on one surface of the porous separator substrate facing the positive electrode, with the active layer comprising inorganic oxide particles having a dielectric constant of 5 or more and a polymer binder; and an electrolyte,
wherein the active layer of the separator is in contact with the positive electrode active material layer, and the lithium metal layer is in contact with the porous separator substrate.

In the lithium metal secondary battery, the positive electrode active material layer may comprise a positive electrode active material including a lithium iron phosphate of the following Formula 1 or a lithium transition metal oxide of the following Formula 2:

[Formula 1] Li₁₊ₐFe_{1-y}M_{y}(PO_{4-b})X_{b}

wherein, in Formula 1, M is one or more selected from the group consisting of Al, Mg and Ti, and -0.5≤a≤0.5, 0≤y≤0.5, 0≤b≤0.1,

[Formula 2] Li_{1+a'}Ni_{1-y'-z'-s}Co_{y'}Mn_{z'}M'ₛO_{2-b'}X_{b'}

wherein, in Formula 2, M' is one or more selected from the group consisting of Al, Fe, V, Cr, Ti, Ta, Mg and Mo, -0.5≤a'≤0.5, 0<y'<1, 0<z'<1, 0≤s<0.2, 0≤b'≤0.1, and
in Formulas 1 and 2, X is one or more selected from the group consisting of F, S and N.

Also, in the lithium metal secondary battery, the porous separator substrate may comprise a polyolefin resin, and the inorganic oxide particles of the active layer may comprise one or more selected from the group consisting of SrTiO₃, SnO₂, CeO₂, MgO, NiO, CaO, ZnO, ZrO₂, Y₂O₃, Al₂O₃ and TiO₂. Further, the polymer binder of the active layer may comprise one or more selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose and polyvinylalcohol.

The above-mentioned separator may be an organic/inorganic porous composite separator in which the inorganic oxide particles are connected and fixed to each other by the polymer binder of the active layer, and a porous structure is formed due to an interstitial volume between the inorganic oxide particles.

In this separator, the active layer in contact with the positive electrode active material layer may have a thickness of, for example, 0.1 µm to 10 µm.

Meanwhile, in the lithium metal secondary battery, the electrolyte may comprise a non-aqueous organic solvent and a lithium salt, and optionally, may further comprises an organic anti-solvent exhibiting a solubility for the lithium salt that is at least 10 times lower than that of the non-aqueous organic solvent.

In this case, the organic anti-solvent may comprise an acyclic ether-based compound substituted with multiple fluorine atoms or an acyclic diether-based compound substituted with multiple fluorine atoms.

### Advantageous Effects

A lithium metal secondary battery according to an embodiment of the present disclosure may have a configuration in which an active layer coated on a separator substrate is formed only on one surface facing the positive electrode, wherein this active layer is in contact with the positive electrode active material layer, and the lithium metal negative electrode is in contact with the separator substrate.

As a result, it was confirmed that the occurrence of side reactions and byproducts at the interface of the lithium metal negative electrode is greatly suppressed. This is predicted to be because as a porous separator substrate exhibiting relatively low reactivity, such as a porous polyolefin substrate, comes into contact with the lithium metal negative electrode, side reactions between the lithium metal negative electrode and the electrolyte are suppressed, and further side reactions with the active layer are also suppressed. In addition, it appears that the active layer of the separator comes into contact with the positive electrode active material layer and thus can improve ionic conductivity and electrochemical properties.

Therefore, the lithium metal secondary battery may suppress the occurrence of byproducts on the lithium metal negative electrode and the increase in resistance resulting therefrom, and also may exhibit more improved electrochemical and lifetime characteristics, such as stability and capacity.

### BRIEF DESCRIPTION OF THE DRAWINGS

FIG. 1 is a graph showing the results of the comparative evaluation of capacity and coulombic efficiency (C.E.%) for every cycle for the lithium metal secondary batteries of Comparative Examples 2 and 3.
FIG. 2 is a graph showing the results of the comparative evaluation of capacity and coulombic efficiency (C.E. %) for every cycle for the lithium metal secondary batteries of Comparative Example 3 and Example 1.
FIGS. 3a and 3b are electron microscope images of the lithium metal negative electrode surface of the lithium metal secondary batteries of Example 1 and Comparative Example 2, respectively.
FIGS. 4a and 4b show electron microscopic analysis of the lithium metal negative electrode surface of the lithium metal secondary battery of Example 1 (FIG. 4a), and the results of elemental analysis using EDS (Energy Dispersive Spectroscopy) based on this analysis (FIG. 4b).
FIGS. 4c and 4d show electron microscopic analysis of the lithium metal negative electrode surface of the lithium metal secondary battery of Comparative Example 2 (FIG. 4c), and the results of elemental analysis using EDS (Energy Dispersive Spectroscopy) based on this analysis (FIG. 4d).

### DETAILED DESCRIPTION OF THE EMBODIMENTS

Hereinafter, terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" as used herein does not exclude the existence or the addition of one or more elements other than those mentioned.

A lithium metal secondary battery according to an embodiment of the present disclosure comprises: a positive electrode including a positive electrode active material layer; a negative electrode including a lithium metal layer; a separator that comprises a porous separator substrate and an active layer formed only on one surface of the porous separator substrate facing the positive electrode, with the active layer comprising inorganic oxide particles having a dielectric constant of 5 or more and a polymer binder; and an electrolyte, wherein the active layer of the separator may be in contact with the positive electrode active material layer, and the lithium metal layer may be in contact with the porous separator substrate.

In the lithium metal secondary battery according to an embodiment of the present disclosure, a positive electrode having a positive electrode active material layer formed on a metal current collector and a negative electrode including a lithium metal layer as a negative electrode active material layer face each other with the separator interposed therebetween.

In this case, the separator comprises a porous separator substrate including a polyolefin resin or the like, and an active layer is formed only on one surface of this porous separator substrate. This active layer may comprise inorganic oxide particles having a dielectric constant of 5 or more and a polymer binder. In a more specific example, the separator may be an organic/inorganic porous composite separator in which the inorganic oxide particles are connected and fixed to each other by the polymer binder, and a porous structure is formed due to an interstitial volume between the inorganic oxide particles. In a specific example, the active layer may have the form of a porous ceramic-coated separator, often referred to as an SRS (safety reinforced separator) or a CCS (ceramic coated separator).

In particular, a lithium metal secondary battery of an embodiment comprises a separator in which the active layer is formed only on one surface of the porous separator substrate facing the positive electrode, and is not formed on the other surface facing the lithium metal negative electrode. Such a separator may have a configuration in which the surface of the active layer is in contact with the surface of the positive electrode active material layer, and the surface of the lithium metal negative electrode, for example, the lithium metal layer, is in contact with the porous separator substrate.

As further supported by the following Examples, it was confirmed that the occurrence of side reactions and byproducts at the interface between the lithium metal negative electrode and the electrolyte are greatly suppressed by the coating configurations of the separator. This is predicted to be because as a porous separator substrate exhibiting relatively low reactivity, for example, a porous polyolefin substrate such as polyethylene or polypropylene, comes into contact with the lithium metal negative electrode, side reactions between the lithium metal layer and the electrolyte are suppressed, and further side reactions with the active layer are also suppressed. In addition, it appears that the active layer of the separator comes into contact with the positive electrode active material layer and thus can improve stability, ionic conductivity and electrochemical properties.

Therefore, the lithium metal secondary battery of an embodiment may suppress the occurrence of byproducts on the lithium metal negative electrode and the increase in resistance resulting therefrom, and may exhibit more improved electrochemical and lifetime characteristics, such as stability and capacity.

### Positive electrode

In the lithium metal secondary battery of an embodiment, the positive electrode may include a positive electrode current collector and a positive electrode active material layer formed on one surface or both surfaces of the positive electrode current collector.

Wherein, the positive electrode current collector is not particularly limited so long as it does not cause chemical changes in the corresponding battery and has conductivity, and for example, stainless steel, aluminum, nickel, titanium, baked carbon, or aluminum or stainless steel whose surface is treated with carbon, nickel, titanium, silver, or the like may be used as the current collector.

The positive electrode current collector may typically have a thickness of 3 µm to 500 µm. The positive electrode current collector may have fine protrusions and depressions formed on the surface thereof to enhance the bonding force of the positive electrode active material layer. For example, the positive electrode current collector may be used in various forms such as a film, a sheet, a foil, a net, a porous body, a foaming body, and a nonwoven fabric structure.

The positive electrode active material layer may include a positive electrode active material, and optionally may further include a conductive material, a binder, and other additives.

The positive electrode active material is not limited as long as it is a compound capable of reversible intercalation and deintercalation of lithium, but as a specific example, a lithium iron phosphate of the following Formula 1 or a lithium transition metal oxide of the following Formula 2 may be used:

[Formula 1] Li₁₊ₐFe_{1-y}M_{y}(PO_{4-b})X_{b}

wherein, in Formula 1, M is one or more selected from the group consisting of Al, Mg and Ti, and -0.5≤a≤0.5, 0≤y≤0.5, 0≤b≤0.1,

[Formula 2] Li_{1+a'}Ni_{1-y'-z'-s}Co_{y'}Mn_{z'}M'ₛO_{2-b'}X_{b'}

wherein, in Formula 2, M' is one or more selected from the group consisting of Al, Fe, V, Cr, Ti, Ta, Mg and Mo, -0.5≤a'≤0.5, 0<y'<1, 0<z'<1, 0≤s<0.2, 0≤b'≤0.1, and
in Formulas 1 and 2, X is one or more selected from the group consisting of F, S and N.

The lithium iron phosphate or the lithium transition metal oxide may be included in an amount of 80% by weight or more, or specifically, 90% by weight to 100% by weight, based on the total weight of the positive electrode active material. In particular, by using lithium iron phosphate, it is possible to further improve the stability of the battery while reducing the manufacturing cost of the lithium metal secondary battery.

In addition, the positive electrode active material is a lithium metal oxide, which may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., Li₁₊ₓ₁Ni_{1-y1}Mn_{y1}O₂(where, -0.5≤x1≤0.5, 0<y1<1), Li₁₊ₓ₂ Mn_{2-z2}Ni_{z2}O₄ (where, -0.5≤x2≤0.5, 0<z2<2), etc.), lithium-nickel-cobalt-based oxide (e.g., Li₁₊ₓ₃Ni_{1-Y1}Co_{Y1}O₂(where, -0.5≤x3≤0.5, 0<Y1<1), etc.), lithium-manganese-cobalt-based oxide (e.g., Li₁₊ₓ₄Co_{1-Y2}Mn_{Y2}O₂ (where, -0.5≤x4≤0.5, 0<Y2<1), Li₁₊ₓ₅Mn_{2-Z1}Co_{Z1}O₄ (where, -0.5≤x5≤0.5, 0<Z1<2), etc.), lithium-nickel-manganese-cobalt-based oxide (e.g., Li₁₊ₐ₂(Niₚ₁Co_{q1}Mnᵣ₁)O₄ (where, -0.5≤a2≤0.5, 0<p1<2, 0<q1<2, 0<r1<2, p1+q1+r1=2), etc.), and the like, and any one thereof or a mixture of two or more thereof may be included.

The positive electrode active material may be included in an amount of 60 to 98% by weight, preferably 80 to 98% by weight, and more preferably 90 to 98% by weight, based on the total weight of the positive electrode active material layer.

The conductive material is a component for further improving the conductivity of the positive electrode active material. Such a conductive material is not particularly limited as long as it has conductivity without causing any chemical change in the battery, and, for example, carbon powder such as carbon black, acetylene black, ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or conductive materials such as polyphenylene derivatives, may be used.

The conductive material may be included in an amount of 0.1 to 20% by weight, specifically 0.5 to 10% by weight, and more specifically 0.5 to 5% by weight, based on the total weight of the positive electrode active material layer.

The binder is a component that assists in the bonding between the conductive material, the positive electrode active material and the positive electrode current collector. Examples of the binder may include polyvinylidene fluoride (PVDF), polyvinyl alcohol, carboxymethylcellulose(CMC), starch, hydroxypropyl cellulose, regenerated cellulose, polyvinylpyrrolidone, polyethylene, polypropylene, ethylene-propylene-diene monomer, sulfonated ethylene-propylene-diene monomer, styrene-butadiene rubber, fluororubber, various copolymers thereof, or the like.

Typically, the binder may be included in an amount of 0.5 to 20% by weight, specifically 0.5 to 10% by weight, and more specifically 0.5 to 5% by weight based on the total weight of the positive electrode active material layer.

In addition, the other additives may further include, for example, a filler and the like as a component for inhibiting the expansion. The filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

### Negative electrode

The negative electrode comprises a lithium metal layer, and may include, for example, a negative electrode current collector and a lithium metal layer formed on one surface or both surfaces of the negative electrode current collector.

Here, the negative electrode current collector is not particularly limited as long as it has high conductivity without causing any chemical change in the battery. Examples of the negative electrode current collector may include copper, stainless steel, aluminum, nickel, titanium, baked carbon, a copper or stainless steel whose surface is treated with carbon, nickel, titanium, silver, or the like, an aluminum-cadmium alloy, or the like.

The negative electrode current collector may typically have a thickness of 3 µm to 500 µm. Similarly to the positive electrode current collector, the negative electrode current collector may have fine protrusions and depressions formed on the surface thereof to enhance the bonding force of the negative electrode active material. For example, the negative electrode current collector may be used in various forms such as a film, a sheet, a foil, a net, a porous body, a foaming body, and a nonwoven fabric structure.

The negative electrode including the lithium metal layer may be formed by a method of physically bonding, rolling, or vapor-depositing on the negative electrode current collector. As the vapor deposition method, an electrical vapor deposition method or a chemical vapor deposition method of the metal may be used.

Here, the lithium metal may include an alloy that partially includes one or more metals selected from the group consisting of nickel (Ni), tin (Sn), copper (Cu), and indium (In) in addition to lithium (Li).

### Separator

In the above-mentioned lithium metal secondary battery, the separator may have a configuration in which an active layer including inorganic oxide particles and a polymer binder is coated onto one surface of a porous separator substrate. This active layer is placed opposite to and in contact with the positive electrode active material layer, and the other surface of the porous separator substrate on which the active layer is not formed may be placed opposite to and in contact with the lithium metal negative electrode, such as the lithium metal layer.

The separator can not only be interposed between the positive electrode and the negative electrode to separate the positive electrode and the negative electrode and provides a migration passage for lithium ions, but reduce the occurrence of byproducts at the negative electrode interface in a lithium metal secondary battery of an embodiment, thereby improving the stability, electrochemical characteristics and lifetime characteristics of the battery.

In such a separator, the type of the porous separator substrate is not particularly limited, but those having relatively low reactivity and excellent mechanical properties, and also having an excellent electrolyte impregnation ability while having low resistance to ion migration of the electrolyte are preferred. More specifically, as the porous polymer film, for example, a porous polymer film made from a polyolefin-based polymer such as an ethylene homopolymer, a propylene homopolymer, an ethylene/butene copolymer, an ethylene/hexene copolymer, an ethylene/methacrylate copolymer or the like, or a stacked structure of two or more layers thereof, may be used. Further, the porous separator substrate may have a thickness of, for example, 5 to 30 µm, 7 to 20 µm, or 8 to 15 µm.

Moreover, the active layer coated on one surface of the porous separator may include inorganic oxide particles having a dielectric constant of 5 or more, 10 or more, or 5 to 30, and a polymer binder. By using inorganic oxide particles having a high dielectric constant, it is possible to improve the ionic conductivity and electrochemical characteristics of the secondary battery,

Non-limiting examples of inorganic oxide particles having a dielectric constant of 5 or more include one or more selected from the group consisting of SrTiO₃, SnO₂, CeO₂, MgO, NiO, CaO, ZnO, ZrO₂, Y₂O₃, Al₂O₃, and TiO₂. Among these, alumina (Al₂O₃) particles can be used appropriately, taking into consideration the ionic conductivity of the secondary battery.

Meanwhile, the polymer binder is a component that bonds the inorganic oxide particles together and between the inorganic oxide particles and the porous separator substrate. The inorganic oxide particles are connected and fixed to each other by such a polymer binder, and the porous structure on the active layer can be defined due to an interstitial volume between the inorganic oxide particles.

As the polymer binder, any polymer having the above-mentioned properties can be used without particular limitation, but from the perspective of improving the electrochemical properties of lithium metal secondary batteries, a polymer that exhibits ionic conductivity by itself may be preferably used.

Non-limiting examples of such polymers include one or more selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose and polyvinylalcohol.

The inorganic oxide particles and the polymer binder may be included in the active layer in a volume ratio of, for example, 1:99 to 99:1, or 70:30 to 30:70, or 40:60 to 60:40 in order to ensure that pores of appropriate size are formed on the active layer. Within this range, as the volume of the inorganic oxide particles relative to the polymer binder increases, the porosity of the separator may also increase.

In addition to the inorganic oxide particles and the polymer binder, the active layer may further include additional components or additives previously known to be usable in ceramic-coated separators.

Further, the thickness of the active layer may range from 0.1 µm to 10 µm, specifically 0.5 µm or more, 1 µm or more, or 2 µm or more, and 8 µm or less, 6 µm or less, 5 µm or less, or 4 µm or less. If the thickness of the active layer is too thin, the stability and electrochemical properties of the lithium metal secondary battery may be insufficient. Conversely, if the thickness of the active layer is too thick, the resistance of the secondary battery may increase.

Meanwhile, the separator can be manufactured by preparing an organic coating solution containing the inorganic oxide particles and the polymer binder, coating the solution on a porous separator substrate, and drying it, similar to typical ceramic-coated separators such as SRS or CCS. However, the coating process is performed only on one surface of the porous separator substrate facing the positive electrode.

### Electrolyte

Meanwhile, a lithium metal secondary battery according to an embodiment further includes an electrolyte containing, for example, a non-aqueous organic solvent and a lithium salt.

The lithium salt is used as a medium for transferring ions within a secondary battery. For example, the lithium salt may include Li⁺ as a cation, and at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may include one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI(lithium bis(perfluoroethanesulfonyl) imide, LiN(SO₂CF₂CF₃)₂) and LiTFSI (lithium bis(trifluoromethanesulfonyl) imide, LiN(SO₂CF₃)₂), or a mixture of two or more of them. However, in terms of excellent stability, it is preferable to include at least one selected from the group consisting of imide-based lithium salts, i.e., LiFSI (lithium bis(fluorosulfonyl) imide, LiN(SO₂F)₂), LiBETI (lithium bis(perfluoroethanesulfonyl) imide, LiN(SO₂CF₂CF₃)₂), and LiTFSI (lithium bis(trifluoromethanesulfonyl) imide, LiN(SO₂CF₃)₂).

In addition to these, any lithium salt that is commonly used as an electrolyte for a lithium secondary battery can be used without limitation.

The concentration of the lithium salt may be appropriately changed within a generally applicable range, however, taking into consideration the output characteristics and stability of the lithium metal secondary battery, the lithium salt may be included in the electrolyte at a concentration of 0.5 M to 3 M, particularly at a concentration of 1 M to 2.5 M, and more particularly at a concentration of 1 M to 2 M.

The non-aqueous organic solvent is not limited as long as it may minimize decomposition due to an oxidation reaction or the like in the charge/discharge process of the lithium secondary battery, and may exhibit desired characteristics together with the other materials. For example, a carbonate-based organic solvent, an ether-based organic solvent, an ester-based organic solvent, and the like may be used alone or in mixture of two or more thereof. However, if the organic anti-solvents described below are also used, the ether-based organic solvent may be primarily used, taking into consideration miscibility with the organic anti-solvent. In this case, the ether-based organic solvent may be included in an amount of about 50% by volume or more, specifically 60% by volume, 70% by volume, or 80% by volume or more, and 100% by volume or less, or 90% by volume or less, based on the total non-aqueous organic solvent.

Additionally, the non-aqueous organic solvent may be included in an amount of 20 to 70% by weight based on the total weight of the electrolyte.

Among the organic solvents, the carbonate-based organic solvent may include at least one selected from the group consisting of a cyclic carbonate-based organic solvent and a linear carbonate-based organic solvent. Specifically, the cyclic carbonate-based organic solvent may include at least one selected from the group consisting of ethylene carbonate(EC), propylene carbonate (PC), 1,2-butylene carbonate, 2,3-butylene carbonate, 1,2-pentylene carbonate, 2,3-pentylene carbonate, vinylene carbonate, vinylethylene carbonate, and fluoroethylene carbonate(FEC). Specifically, it may include a mixed solvent of ethylene carbonate having a high dielectric constant and propylene carbonate having a relatively low melting point compared to ethylene carbonate.

Further, the linear carbonate-based organic solvent is a solvent having low viscosity and low dielectric constant, and may include at least one selected from the group consisting of dimethyl carbonate(DMC), diethyl carbonate(DEC), dipropyl carbonate, ethyl methyl carbonate(EMC), methylpropyl carbonate, and ethylpropyl carbonate, and, more specifically, it may include dimethyl carbonate.

The ether-based organic solvent may include any one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the cyclic carbonate-based compound is mixed with the low viscosity, low dielectric constant linear carbonate-based compound, such as dimethyl carbonate and diethyl carbonate in an appropriate ratio, an electrolyte having high electrical conductivity may be prepared, which may be more preferably used.

Meanwhile, the electrolyte may further comprise an organic anti-solvent exhibiting a solubility for the lithium salt that is at least 10 times lower than that of the non-aqueous organic solvent. The electrolyte further comprising such an organic anti-solvent may include a region where a high-concentration lithium salt is locally solvated by the non-aqueous organic solvent, and an organic anti-solvent region surrounding the corresponding solvated region. As a result, through solvation of high-concentration lithium salts, it becomes possible to further improve the output of secondary batteries and also suppress side reactions between the lithium metal negative electrode and the electrolyte.

The organic anti-solvent is an organic solvent that exhibits substantially no solubility with respect to lithium salts and is miscible with the non-aqueous organic solvent, and for example, an acyclic ether-based compound substituted with multiple fluorine atoms or an acyclic diether-based compound substituted with multiple fluorine atoms may be used. Specific examples thereof include one or more selected from the group consisting of 1,1,2,2-tetrafluoroethyl-2,2,3,3-tetrafluoropropyl ether (TTE), bis(2,2,2-trifluoroethyl) ether (BTFE), 1,1,2,2-tetrafluoroethyl-2,2,2-trifluoroethyl ether (TFTFE), methoxynonafluorobutane (MOFB), 1H,1H,5H-octafluoropentyl-1,1,2,2-tetrafluoroethyl ether (OTE), ethoxynonafluorobutane (EOFB), 1,2-bis(1,1,2,2-tetrafluoroethoxy)ethane (TFEE), and bis(2,2,2-trifluoroethoxy)ethane.

The amount of the organic anti-solvent used can be adjusted depending on the type of non-aqueous organic solvent and lithium salt, or the overall concentration of the lithium salt. For example, the organic anti-solvent may be included in the electrolyte in an amount such that the molar ratio of the organic solvent : the non-aqueous organic solvent is 1:0.2 to 1:5, or 1:0.5 to 1:2.

Meanwhile, the lithium metal secondary battery of an embodiment can be manufactured according to a conventional method in the art. For example, the lithium metal secondary battery can be manufactured by housing an electrode assembly including a positive electrode, a negative electrode, and a separator in a case, and injecting and impregnating the above-mentioned electrolyte in the case.

Such a lithium metal secondary battery can be applied not only to a battery cell used as power sources for small-sized devices, but can also be particularly suitably used as a unit battery in a battery module, which is a power source for medium-sized and large-sized devices.

Hereinafter, the present disclosure will be described in more detail with reference to specific examples. However, the following examples are only exemplary embodiments for facilitating understanding of the disclosure, and are not intended to limit the scope of the disclosure.

### Example 1: Manufacture of Lithium Metal Secondary Battery

First, a polyethylene substrate (width x length x thickness: 40 mm x 60 mm x 9 µm, porosity: 55-60%) was prepared for manufacturing a separator.

Al₂O₃ powder with a D50 of 500 nm was used as the inorganic oxide particle, and PVdF was used as the polymer binder. The inorganic particles (Al₂O₃) and the binder (PVdF) were mixed in a 1:1 volume ratio in NMP (N-Methyl-2-pyrrolidone) solvent to prepare a coating solution. The solids content of the total coating solution (100 wt.%) containing the inorganic particles (Al₂O₃) and the binder (PVdF) was set to 50 wt.%.

The coating solution was applied onto one surface of the polyethylene substrate and dried at 80°C for 180 minutes to produce a single-side coated separator. At this time, the thickness of the coated active layer was about 2.5 µm.

Separately, a 15 µm-thick aluminum (Al) metal film was prepared as a positive electrode current collector. LiFePO4 as a positive electrode active material : carbon black as a conductive material : PVDF as a binder were added into an NMP solvent in a weight ratio of 96:1:3 and dispersed to prepare a positive electrode slurry. The positive electrode slurry was then coated to a thickness of 60 micrometers on one surface of the aluminum metal thin film, followed by drying and rolling to produce a positive electrode.

The ceramic-coated separator was interposed between the positive electrode and a lithium foil (thickness: 45 µm) serving as the negative electrode, wherein the coated surface of the separator was placed opposite to and in contact with the positive electrode active material layer, and the uncoated surface of the separator substrate was placed opposite to and in contact with the negative electrode lithium foil.

To the electrode assembly prepared as above, a lithium salt of LiFSI was dissolved in an ethylene glycol dimethyl ether solvent at a concentration of 1.2 M, and 1,1,2,2-tetrafluoroethyl-2,2,3,3-tetrafluoropropyl ether(TTE), which is an organic anti-solvent, was added at 70 wt.% of the total electrolyte to obtain an electrolyte. This electrolyte was then injected into the electrode assembly to manufacture a coin half-cell.

### Comparative Example 1: Manufacture of Lithium Metal Secondary Battery

A coin half-cell type lithium metal secondary battery was manufactured in the same manner as in Example 1, except that the polyethylene substrate (width x length x thickness: 40 mm x 60 mm x 9 µm, porosity: 55-60%) separately not coated with ceramic was used as the separator.

### Comparative Example 2: Manufacture of Lithium Metal Secondary Battery

The separator, the positive electrode, the negative electrode, and the electrolyte were manufactured in the same manner as in Example 1.

However, a coin half-cell type lithium metal secondary battery was manufactured in the same manner as in Example 1, except that, when the ceramic-coated separator was interposed between the positive electrode and a lithium foil (thickness: 45 µm) as the negative electrode, the coated surface of the separator was placed opposite to and in contact with the lithium foil of the negative electrode, and the uncoated surface of the separator substrate was placed opposite to and in contact with the active material layer of the positive electrode.

### Comparative Example 3: Manufacture of Lithium Metal Secondary Battery

In the manufacture of a separator, a coating solution containing the inorganic particles (Al₂O₃) and the binder (PVdF) was applied onto both surfaces of a polyethylene substrate and dried to produce a double-coated separator.

At this time, the thicknesses of the coated active layers were approximately 2.5 µm and 2.5 µm, respectively.

A coin half-cell type lithium metal secondary battery was manufactured in the same manner as in Example 1, except that the double-coated separator was interposed between the positive electrode and the negative electrode, so that both coated surfaces of the separator was placed opposite to and in contact with the active material layer of the positive electrode and the lithium foil of the negative electrode, respectively.

### <Experimental Example 1>

Activation was performed for two cycles through a process in which the coin half-cells manufactured in Examples and Comparative Examples were aged at 25°C for 12 hours, charged with a constant current of 0.1C at the same temperature until the voltage reached 3.7 V, and fully discharged with a constant current of 0.1C at 25°C. Subsequently, the process of charging with a constant current of 0.5 C at 25°C until the voltage reached 3.7 V and then discharging to 0.5 C was repeatedly performed.

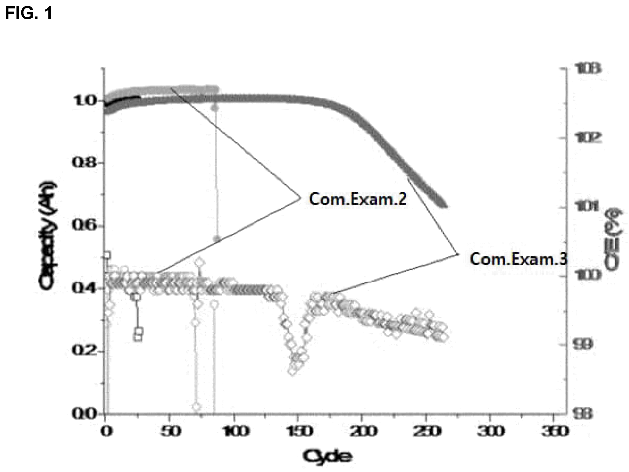

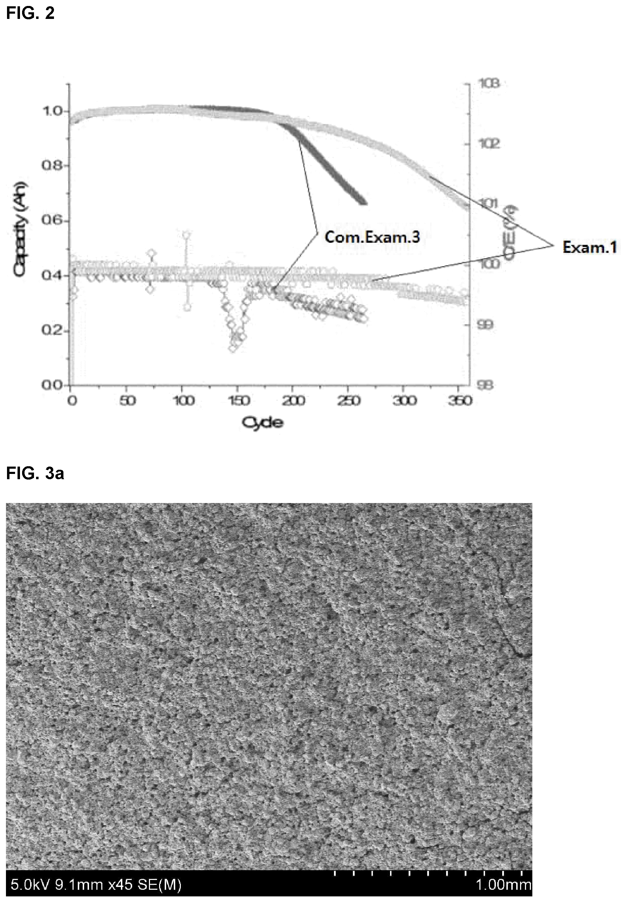

As these charge-discharge cycles progressed, the capacity and coulombic efficiency (C.E. %) were evaluated for each cycle, and the results are shown in FIGS. 1 and 2. For reference, FIG. 1 shows the results of the comparative evaluation of Comparative Examples 2 and 3, and FIG. 2 shows the results of the comparative evaluation of Comparative Example 3 and Example 1.

Referring to FIGS. 1 and 2, it was confirmed that the lithium metal secondary battery of Example 1 exhibited superior capacity, coulombic efficiency and lifetime characteristics compared to the lithium metal secondary battery of Comparative Example as the ceramic coating surface of the separator was placed opposite to and in contact with only the positive electrode active material layer.

### <Experimental Example 2>

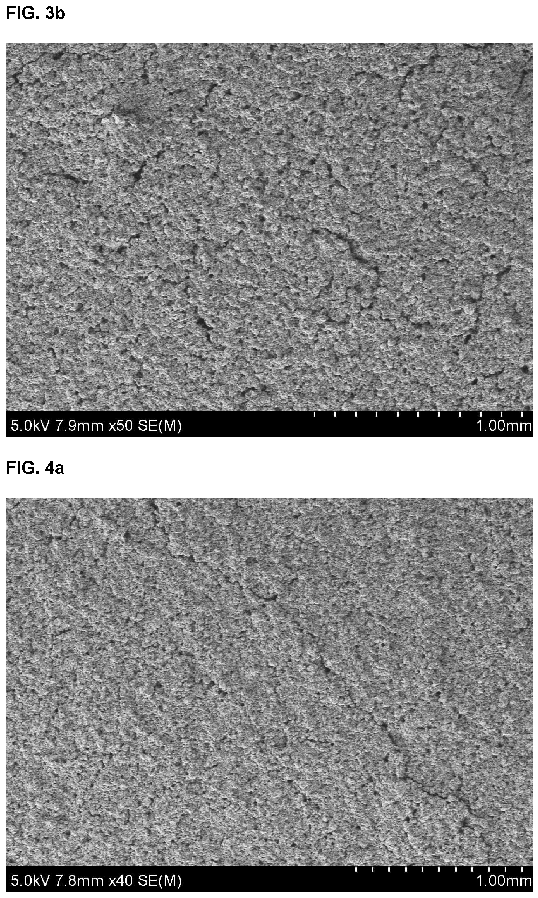

In the lithium metal secondary batteries of Example 1 and Comparative Example 2, the lithium metal negative electrode surface was analyzed using an electron microscope, and the results are shown in FIGS. 3a and 3b, respectively. Additionally, in the lithium metal secondary batteries of Example 1 and Comparative Example 2, the lithium metal negative electrode surface was analyzed using an electron microscope, and based on this analysis, elemental analysis was performed using EDS (Energy Dispersive Spectroscopy), and the results are shown in FIGS. 4a to 4d, respectively.

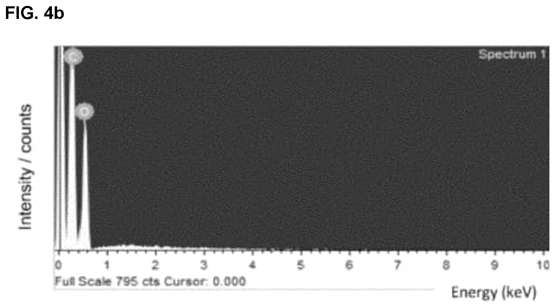

Referring to FIG. 3a and FIGS, 4a, and 4b, it was confirmed that in the lithium metal secondary battery of Example 1, no byproducts were occurred on the surface of the lithium metal negative electrode, and clean surface properties were maintained.

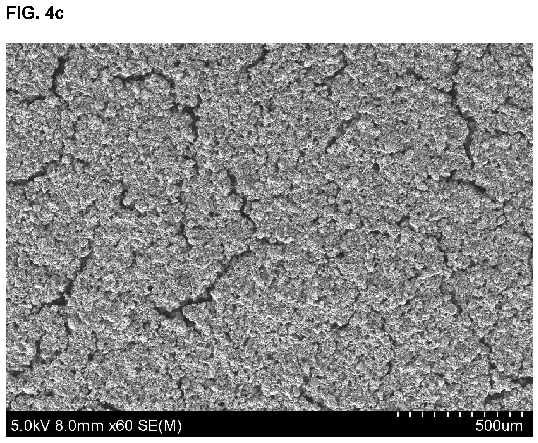

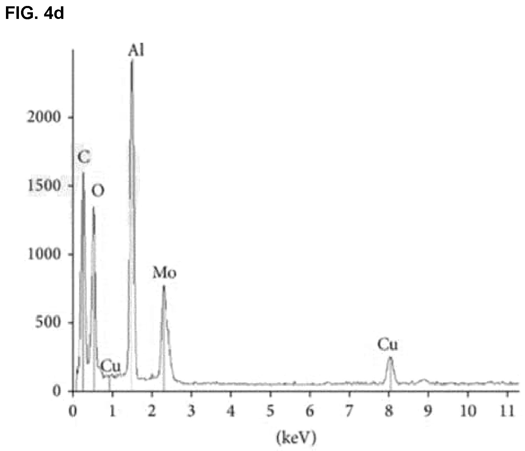

In contrast, referring to FIGS. 3b, 4c, and 4d, it was confirmed that in the lithium metal secondary battery of Comparative Example 2, large amounts of byproducts were occurred on the surface of the lithium metal negative electrode (see the carbon and oxygen peaks in FIG. 4d), and in particular, the occurrence of large amounts of byproducts containing aluminum and copper, which are thought to be derived from the coating layer (active layer) of the separator, the electrolyte and/or the current collector, was confirmed.

From the above, it was confirmed that in the case of the lithium metal secondary battery of Comparative Example 2, in which the separator coating layer (active layer) was opposite to the lithium metal negative electrode, large amounts of byproducts and side reactions were occurred on the negative electrode surface, thereby exhibiting inferior electrochemical and lifetime characteristics. Furthermore, this tendency can also be assumed to be the same for the lithium metal secondary battery of Comparative Example 3, in which the coating layer (active layer) of the separator faces both the negative electrode and the positive electrode.

## Claims

1. A lithium metal secondary battery comprising:
a positive electrode including a positive electrode active material layer;
a negative electrode including a lithium metal layer;
a separator that comprises a porous separator substrate and an active layer formed only on one surface of the porous separator substrate facing the positive electrode, with the active layer comprising inorganic oxide particles having a dielectric constant of 5 or more and a polymer binder; and
an electrolyte,
wherein the active layer of the separator is in contact with the positive electrode active material layer, and the lithium metal layer is in contact with the porous separator substrate.

2. The lithium metal secondary battery according to claim 1, wherein the positive electrode active material layer comprises a positive electrode active material including a lithium iron phosphate of the following Formula 1 or a lithium transition metal oxide of the following Formula 2:
[Formula 1] Li₁₊ₐFe_{1-y}M_{y}(PO_{4-b})X_{b}
wherein, in Formula 1, M is one or more selected from the group consisting of Al, Mg and Ti, and -0.5≤a≤0.5, 0≤y≤0.5, 0≤b≤0.1,
[Formula 2] Li_{1+a'}Ni_{1-y'-z'-s}Co_{y'}Mn_{z'}M'ₛO_{2-b'}X_{b'}
wherein, in Formula 2, M' is one or more selected from the group consisting of Al, Fe, V, Cr, Ti, Ta, Mg and Mo, -0.5≤a'≤0.5, 0<y'<1, 0<z'<1, 0≤s<0.2, 0≤b'≤0.1, and in Formulas 1 and 2, X is one or more selected from the group consisting of F, S and N.

3. The lithium metal secondary battery according to claim 1, wherein the porous separator substrate comprises a polyolefin resin.

4. The lithium metal secondary battery according to claim 1, wherein the inorganic oxide particles comprise one or more selected from the group consisting of SrTiO₃, SnO₂, CeO₂, MgO, NiO, CaO, ZnO, ZrO₂, Y₂O₃, Al₂O₃ and TiO₂.

5. The lithium metal secondary battery according to claim 1, wherein the polymer binder comprises one or more selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose and polyvinylalcohol.

6. The lithium metal secondary battery according to claim 1, wherein the separator is an organic/inorganic porous composite separator in which the inorganic oxide particles are connected and fixed to each other by the polymer binder of the active layer, and a porous structure is formed due to an interstitial volume between the inorganic oxide particles.

7. The lithium metal secondary battery according to claim 1, wherein a thickness of the active layer is 0.1 µm to 10 µm.

8. The lithium metal secondary battery according to claim 1, wherein the electrolyte comprises a non-aqueous organic solvent and a lithium salt.

9. The lithium metal secondary battery according to claim 8, wherein the electrolyte further comprises an organic anti-solvent exhibiting a solubility for the lithium salt that is at least 10 times lower than that of the non-aqueous organic solvent.

10. The lithium metal secondary battery according to claim 9, wherein the organic anti-solvent comprises an acyclic ether-based compound substituted with multiple fluorine atoms or an acyclic diether-based compound substituted with multiple fluorine atoms.

11. The lithium metal secondary battery according to claim 9, wherein the organic anti-solvent comprises one or more selected from the group consisting of 1,1,2,2-tetrafluoroethyl-2,2,3,3-tetrafluoropropyl ether (TTE), bis(2,2,2-trifluoroethyl) ether (BTFE), 1,1,2,2-tetrafluoroethyl-2,2,2-trifluoroethyl ether (TFTFE), methoxynonafluorobutane (MOFB), 1H,1H,5H-octafluoropentyl-1,1,2,2-tetrafluoroethyl ether (OTE), ethoxynonafluorobutane (EOFB), 1,2-bis(1,1,2,2-tetrafluoroethoxy)ethane (TFEE), and bis(2,2,2-trifluoroethoxy)ethane.
